# EUROPEAN PATENT APPLICATION

(11) **EP 4 368 644 A1**
(43) Date of publication of application: **15.05.2024**
(21) Application number: 22837654.7
(22) Date of filing: 04.07.2022
(51) Int. Cl.: C08F 8/12, C08F 8/48, C08F 2/20, C09K 23/52

(54) **DISPERSION STABILIZER AND METHOD FOR PRODUCING VINYL POLYMER**

(30) Priority: 07.07.2021 JP 2021113195
(71) Applicant: Japan Vam & Poval Co., Ltd., Sakai-shi, Osaka 592-8331 (JP)
(72) Inventor: OMORI Takehiro, Sakai-shi, Osaka 592-8331 (JP); KOZUKA Yoshiaki, Sakai-shi, Osaka 592-8331 (JP); TANAKA Shun, Sakai-shi, Osaka 592-8331 (JP)
(74) Representative: Kraus & Lederer PartGmbB
(86) International application number: PCT/JP2022/026647
(87) International publication number: WO 2023/282239

(57) **Abstract**

Provided are a novel dispersant for suspension polymerization, and the like. The dispersion stabilizer includes a polyvinyl alcohol-based polymer (A) having an acetal skeleton (a) having a polymerizable unsaturated bond and an ionic skeleton (b).

## Description

### TECHNICAL FIELD

The present invention relates to a polyvinyl alcohol-based polymer which can preferably be used as a dispersion stabilizer (for example, a dispersion stabilizer for suspension polymerization of a vinyl-based monomer, in particular, a vinyl chloride monomer) and the like, and a production method for producing a vinyl-based polymer (especially a vinyl chloride-based polymer (resin)) using the polyvinyl alcohol-based polymer (or the dispersion stabilizer).

### BACKGROUND ART

As a method for industrial production of a vinyl chloride-based resin, generally employed is batch suspension polymerization, in which a vinyl-based monomer (monomer), such as vinyl chloride, is dispersed in an aqueous solvent in the presence of a dispersion stabilizer, and subjected to polymerization with use of an oil-soluble polymerization initiator. In a polymerization process, the quality of such a vinyl chloride-based resin is controlled by various factors, for example, the polymerization rate, the ratio of the aqueous solvent to the monomer, the polymerization temperature, the kind and the amount of the polymerization initiator, the type of the polymerization vessel, the stirring rate, and the kind and the amount of the dispersion stabilizer. Among them, the dispersion stabilizer has a significant influence.

The role of the dispersion stabilizer in suspension polymerization for a vinyl chloride-based resin is to disperse a monomer in an aqueous solvent, to give stable droplets, to uniformize the sizes of the droplets that repeatedly disperse and aggregate together, and to control the cohesiveness of polymerized particles. Accordingly, the dispersion stabilizer needs to have, for example, the following properties:
(1) to control the particle sizes of vinyl chloride-based resin particles to be within an appropriate range;
(2) to give the vinyl chloride-based resin particles an excellent plasticizer absorbability property and an excellent molding processability;
(3) to give vinyl chloride-based resin particles having a porosity within a certain range to facilitate the removal of residual monomers; and the like.

That is, it is required for the dispersion stabilizer, for example, to exhibit an excellent dispersion ability, and to appropriately control the particle diameter, the particle form, etc. of a vinyl chloride-based resin.

Generally, as the dispersion stabilizer, polyvinyl alcohol-based resins (hereinafter, may be abbreviated as PVA), cellulose derivatives, and the like are used alone or in combination thereof as appropriate.

For example, Non-patent Literature 1 discloses a method where a dispersion stabilizer for suspension polymerization of vinyl chloride is a PVA which has a viscosity-average polymerization degree of 2000 and a saponification degree of 88 or 80 mol% and which is considered to have a high emulsifying capacity, or a PVA which has a viscosity-average polymerization degree of 600 to 700 and a saponification degree of around 70 mol%.

### Citation List

### Non-patent Literature

Non-patent Literature 1: "Poval", Kobunshi Kankokai, issued in 1981

### SUMMARY OF INVENTION

### TECHNICAL PROBLEM

PVAs have been used as a dispersion stabilizer as described above, but the present inventors consider that a further improved PVA is required.

For example, a PVA with a relatively smaller saponification degree (for example, about 70 mol%) is poorer in hydrophilicity than a PVA with a greater saponification degree, and therefore it is difficult to prepare an aqueous solution from such a PVA with a relatively smaller saponification degree, and a 4% aqueous solution thereof has a low cloud point (for example, around 30°C), so that storing the aqueous solution of such a PVA in a tank or the like at a temperature equal to or higher than the cloud point is liable to precipitation (separation) of the PVA.

Furthermore, in general, the polymerization temperature of a vinyl chloride monomer is within a range of 40 to 70°C, which is equal to or higher than the cloud points of PVAs. Therefore, feeding a PVA aqueous solution into a polymerization vessel (with hot water within a range of 40 to 70°C) should be conducted with caution to avoid the precipitation of the PVA in the polymerization vessel.

As described above, it is required for the dispersion stabilizer (PVA as a dispersion stabilizer for suspension polymerization) to have additional properties such as aqueous solution preparation easiness, aqueous solution stability (furthermore, hot-water dispersibility), and the like in addition to fundamental properties that the dispersion stabilizer fundamentally possesses for dispersion stabilization. Such additional properties are more difficult to maintain for a PVA with a lower saponification degree or a higher polymerization degree.

Under such circumstances, the present inventors have made some attempts for improving the hydrophilicity, such as introducing an itaconic acid-derived unit in a PVA. In some cases, probably due to consequent poorer surface activities, these attempts unsuccessfully resulted in deterioration in the fundamental properties of the dispersion stabilizer (for example, instable polymerization, and particle size enlargement of the resultant vinyl chloride resin, which would easily lead to a poor plasticizer absorbability property thereof). It has been quite difficult to give the dispersion stabilizer the aqueous solution preparation easiness, aqueous solution stability, hot-water dispersibility, and the like, while keeping the fundamental properties of the dispersion stabilizer.

An object of the present invention is to provide a novel dispersion stabilizer and the like, in view of the points mentioned above.

### SOLUTION TO PROBLEM

In order to solve the above problems, the present inventors carried out earnest investigations, and consequently found that a particular PVA-based polymer is useful as a dispersion stabilizer (for example, as a dispersion stabilizer for suspension polymerization) and the like. The present inventors conducted further examination and completed the present invention.

That is, the present invention relates to the following invention, etc.
[1] A dispersion stabilizer (or dispersant) comprising: a polyvinyl alcohol-based polymer (A) having an acetal skeleton (a) (an acetal group, an acetal unit, a non-ionic acetal skeleton) having a polymerizable unsaturated bond; and an ionic skeleton (b) (a skeleton having an ionic group, ionic group).
[2] The dispersion stabilizer according to [1], wherein the acetal skeleton (a) includes a skeleton (a structural unit, a constitutional unit) represented by the following Formula (a1): 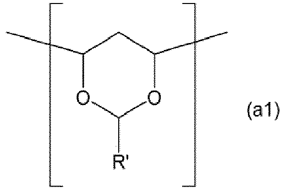 where R' is a group having a polymerizable unsaturated bond.
[3] The dispersion stabilizer according to [1] or [2], wherein the content (ratio, content percentage) of the acetal skeleton (a) in the polyvinyl alcohol-based polymer (A) is in a range of 0.05 to 5 mol% per monomer unit.
[4] The dispersion stabilizer according to any one of [1] to [3], wherein the ionic skeleton (b) includes a skeleton represented by the following Formula (b1): 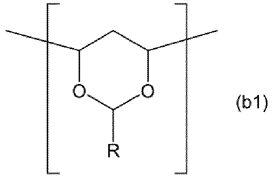 where R is a group having an ionic group.
[5] The dispersion stabilizer according to [4], wherein the ionic skeleton (b) includes a skeleton represented by Formula (b1) wherein R is a hydrocarbon group having an ionic group.
[6] The dispersion stabilizer according to any one of [1] to [5], wherein the ionic skeleton (b) includes at least one skeleton selected from skeletons represented by Formula (b1) where R is an ionic group, or from skeletons represented by the following Formula (b1-1): 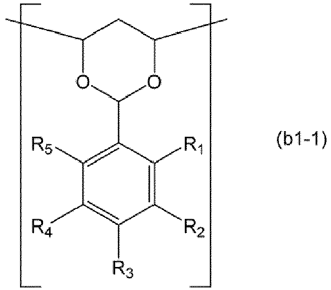 where R₁ to R₅ are independently a hydrogen atom or a substituent, wherein at least one of R₁ to R₅ is an ionic group.
[7] The dispersion stabilizer according to any one of [4] to [6], wherein the ionic group has at least one selected from acidic groups (such as a carboxyl group and a sulfonate group) and salts thereof.
[8] The dispersion stabilizer according to any one of [1] to [7], wherein the ionic skeleton (b) includes a skeleton corresponding to at least one selected from monomers having an ionic group and chain transfer agents (such as alcohols, carbonyl compounds (such as aldehydes), or thiols) having an ionic group.
[9] The dispersion stabilizer according to any one of [1] to [8], wherein the ionic skeleton (b) includes a skeleton corresponding to at least one monomer selected from monomers having a carboxyl group, monomers having a sulfonate group, and salts thereof.
[10] The dispersion stabilizer according to any one of [1] to [9], wherein the ionic skeleton (b) includes a skeleton corresponding to at least one thiol selected from thiols having a carboxyl group, thiols having a sulfonate group, and salts thereof.
[11] The dispersion stabilizer according to any one of [1] to [10], wherein the content (ratio, content percentage) of the ionic skeleton (b) in the polyvinyl alcohol-based polymer (A) is in a range of 0.01 to 5 mol% per monomer unit.
[12] The dispersion stabilizer according to any one of [1] to [11], wherein the polyvinyl alcohol-based polymer (A) contains the acetal skeleton (a) at a ratio of 2 to 15 mol per mol of the ionic skeleton (b).
[13] The dispersion stabilizer according to any one of [1] to [12], wherein the polyvinyl alcohol-based polymer (A) contains the ionic skeleton (b) at a ratio of 0.2 to 5 mol per 100 mol of a vinyl ester unit.
[14] The dispersion stabilizer according to any one of [1] to [13], wherein the polyvinyl alcohol-based polymer (A) has a saponification degree in a range of 50 to 90 mol%.
[15] The dispersion stabilizer according to any one of [1] to [14], wherein the polyvinyl alcohol-based polymer (A) has a polymerization degree in a range of 200 to 2000.
[16] The dispersion stabilizer according to any one of [1] to [15], wherein the polyvinyl alcohol-based polymer (A) is such that a 4% aqueous solution thereof has a cloud point of 25°C or higher.
[17] The dispersion stabilizer according to any one of [1] to [16], being a dispersion stabilizer for polymerization.
[18] The dispersion stabilizer according to any one of [1] to [17], being a dispersion stabilizer for suspension polymerization.
[19] The dispersion stabilizer according to any one of [1] to [18], being a dispersion stabilizer for suspension polymerization for a vinyl-based monomer including vinyl chloride.
[20] A polyvinyl alcohol-based polymer (A) recited in any one of [1] to [19].
[21] An aqueous liquid, comprising the polyvinyl alcohol-based polymer (A) recited in any one of [1] to [19], or the dispersion stabilizer according to any one of [1] to [19].
[22] A method of producing a vinyl-based polymer, the method comprising polymerizing a viny-based monomer in the presence of the polyvinyl alcohol-based polymer (A) recited in any one of [1] to [19] or in the presence of the dispersion stabilizer according to any one of [1] to [19].
[23] The method according to [22], wherein the polymerizing is suspension polymerization.
[24] The method according to [22] or [23], wherein the polymerizing performs suspension polymerization of a viny-based monomer including vinyl chloride.

### ADVANTAGEOUS EFFECTS OF INVENTION

The present invention can provide a novel dispersion stabilizer and the like.

Such a dispersion stabilizer (particular PVA-based polymer) can provide easy preparation of a water-based solution (especially, an aqueous solution) as well as excellent storage stability and hot-water dispersibility, and the like of the water-based solution.

Moreover, the dispersion stabilizer (particular PVA-based polymer) of the present invention also possesses the fundamental properties that a dispersion stabilizer fundamentally possesses for dispersion stabilization. For example, excellent polymerization stability and the like can be provided, and it becomes possible to efficiently obtain a resin (for example, a vinyl-based polymer such as vinyl chloride-based resin) with an average particle diameter within an appropriate range or with a sufficient plasticizer absorbability property.

In particular, according to the dispersion stabilizer (particular PVA-based polymer) of the present invention, the easy preparation of a water-based solution, excellent storage stability and hot-water dispersibility of the water-based solution, as described above, can be attained without deteriorating the fundamental properties of the dispersion stabilizer (that is, while securing the fundamental properties of the dispersion stabilizer).

### DESCRIPTION OF EMBODIMENTS

Hereinafter, embodiments of the present invention will be described in detail. However, the present invention is not limited to the embodiments described below.

The present invention can provide a particular polyvinyl alcohol-based polymer, that is, a polyvinyl alcohol-based polymer (A) (hereinafter, which may be referred to as a PVA-based polymer (A) or the like).

The PVA-based polymer is useful as a dispersion stabilizer (dispersant, especially a dispersion stabilizer for suspension polymerization) and the like.

This means that the present invention can also provide a dispersion stabilizer including the PVA-based polymer (A).

The dispersion stabilizer may include a PVA-based polymer (A) alone or two or more types of PVA-based polymers (A) in combination.

In the following, the present invention will be described in detail.

### Polyvinyl alcohol-based polymer (A)

The PVA-based polymer (A) has (a) an acetal skeleton (an acetal group, an acetal unit, a nonionic acetal skeleton) having a polymerizable unsaturated bond (a radical polymerizable unsaturated bond, a radical polymerizable group), and (b) an ionic skeleton (a skeleton having an ionic group, ionic group).

### Acetal skeleton (a)

The acetal skeleton (a) is not particularly limited as to the number of the polymerizable unsaturated bonds and may have one or more polymerizable unsaturated bonds (for example, one to five polymerizable unsaturated bonds).

The acetal skeleton (a) is such that the acetal may be a cyclic acetal or an acyclic (chain) acetal and may be preferably a cyclic acetal.

A typical acetal skeleton having a polymerizable unsaturated bond includes a skeleton (structural unit) represented by the following Formula (a1). Therefore, the acetal skeleton (a) may include a skeleton represented by the following Formula (a1): 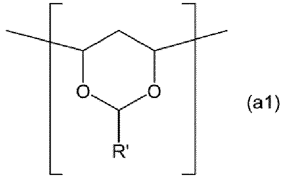 where R' is a group having a polymerizable unsaturated bond.

In the Formula (a1), R' is a group having a polymerizable unsaturated bond. R' may be a polymerizable unsaturated bond group or a group having a polymerizable unsaturated bond (such as a hydrocarbon group).

The group having a polymerizable unsaturated bond may have a substituent as well as the polymerizable unsaturated bond. The substituent may be selected as appropriate according to the kind of the group having a polymerizable unsaturated bond, and is not particularly limited. For example, the substituent may be a hydroxy group, a halogen atom, an acyl group, an ester group, an alkoxy group, a nitro group, a substituted amino group, a group different from the substituted group that the substituent substitutes (for example, an aromatic group such as an aryl group), or the like group.

The substitution may involve a single substituent or two or more types of substituents in combination.

Examples of the group having a polymerizable unsaturated bond (especially, a double bond (an ethylene double bond)) include: groups having a single polymerizable unsaturated bond and groups having two or more polymerizable unsaturated bonds, where examples of the groups having a single polymerizable unsaturated bond include alkenyl groups such as hydrocarbon groups (substituted or unsubstituted hydrocarbon groups) having 2 or more carbon atoms (for example, about 2 to 30 carbon atoms, preferably about 2 to 14 carbon atoms, or more preferably about 2 to 10 carbon atoms) such as vinyl groups, allyl groups, propenyl groups (such as 1-propenyl and 2-propenyl groups), butenyl, pentenyl, 6-methyl-5-hexenyl, decenyl, 2-(dimethylamino)vinyl, cyclohexenyl, and 2-phenylethenyl groups) and the like, and examples of the groups having two or more polymerizable unsaturated bonds include hydrocarbon groups (substituted or unsubstituted hydrocarbon groups) such as alkapolyenyl groups, such as alkadienyl groups (for example, alkadienyl groups having 4 or more carbon atoms (for example, about 4 to 30 carbon atoms, preferably about 4 to 14 carbon atoms, or more preferably about 4 to 10 carbon atoms) such as 1,3-pentadienyl, 2,6-dimethyl-1,5-hexadienyl, cyclohexadienyl, and propenylcyclohexenyl group), alkatrienyl groups (for example, alkatrienyl groups having 6 or more carbon atoms (for example, about 6 to 30 carbon atoms, or preferably about 6 to 24 carbon atoms)), alkatetraenyl groups (for example, alkatetraenyl groups having 8 or more carbon atoms (for example, about 8 to 30 carbon atoms, or more preferably about 8 to 24 carbon atoms)), alkapentaenyl groups (for example, alkapentaenyl groups having 10 or more carbon atoms (for example, about 10 to 30, or more preferably about 10 to 24 carbon atoms)), and the like.

The acetal skeleton having a polymerizable unsaturated bond (for example, a group represented by Formula (a1) (or R'-< in Formula (a1)) may be one derived from a carbonyl compound corresponding thereto (such as an aldehyde, or an acetal, a ketone, or the like thereof), especially an aldehyde (such as an R'CHO (an aldehyde where R' is a hydrocarbon group having a polymerizable unsaturated bond). The carbonyl compound may be substituted, as described above.

Examples of such a carbonyl compound include unsaturated aldehydes (especially monoaldehydes), and ketones, acetals, and the like corresponding thereto, where examples of the unsaturated aldehydes include: alkenals [for example, alkenals having 3 to 15 carbon atoms or preferably having 3 to 10 carbon atoms, such as acrolein, crotonaldehyde, methacrolein, 3-buthenal, 3-methyl-2-butenal, 2-methyl-2-butenal, 2-pentenal, 3-pentenal, 4-pentenal, 2-hexenal, 3-hexenal, 4-hexenal, 5-hexenal, 2-ethylcrotonaldehyde, 2-methyl-2-pentenal, 3-(dimethylamino)acrolein, 10-undecenal, myristoleic aldehyde, palmitoleic aldehyde, oleic aldehyde, elaidic aldehyde, vaccenic aldehyde, gadoleic aldehyde, erucic aldehyde, nervonic aldehyde, linoleic aldehyde, citronellal, and cinnamaldehyde]; alkadienals [for example, alkadienals having 5 to 15 carbon atoms, or preferably having 5 to 10 carbon atoms such as 2,4-pentadienal, 2,4-hexadienal, 2,6-nonadienal, citral, and perillaldehyde]; alkatrienals [for example, alkatrienals having 7 to 30 carbon atoms or preferably having 7 to 25 carbon atoms, such as linolenic aldehyde and eleostearic aldehyde]; alkatetraenals [for example, alkatetraenals having 9 to 30 carbon atoms or preferably having 9 to 25 carbon atoms, such as stearidonic aldehyde and arachidonic aldehyde]; and alkapentaenals [for example, alkapentaenals having 11 to 30 carbon atoms or preferably having 11 to 25 carbon atoms, such as eicosapentaenoic aldehyde]; and the like.

In the cases where the carbonyl compound has isomers such as cis and trans isomers, the examples include all of such isomers (for examples, both the cis and trans isomers).

As described above, the carbonyl compound may be an acetal, which is a condensation compound of an aldehyde and an alcohol. Examples of the acetals include, but not limited to, condensation compounds with a primary alcohol (for example, methanol).

These carbonyl compounds may be employed alone or two or more of them may be employed in combination.

For the sake of water solubility and the like, the carbonyl compound may be preferably a monocarbonyl compound (such as a monoaldehyde). Even in case where a polyvalent carbonyl compound such as a polyvalent aldehyde such as a dialdehyde is employed, it is often such that the polyvalent carbonyl compound content is used in such an amount (e.g., such a small amount) that sufficient water solubility and the like can be ensured.

The acetal skeleton having a polymerizable unsaturated bond (for example, an acetal skeleton represented by Formula (a1)) may be a skeleton introducible via a hydroxy group, and for example, may be an acetal skeleton derived from (introduced via) two adjacent hydroxy groups (for example, hydroxy groups of vinyl alcohol units).

For example, in case where a carbonyl compound having a polymerizable unsaturated bond (such as an aldehyde, a ketone, or the like) is employed, a PVA-based polymer (A) having an acetal skeleton (a) having a polymerizable unsaturated bond can be obtained by, for example, acetalizing two adjacent OH groups in a PVA-based polymer with the carbonyl compound having a polymerizable unsaturated bond.

The acetal skeleton having a polymerizable unsaturated bond (for example, an acetal skeleton represented by Formula (a1)) may or may not have an ionic group (ionic skeleton).

The PVA-based polymer (A) including an acetal skeleton having a polymerizable unsaturated bond may include such an acetal skeleton alone or two or more types of such acetal skeletons in combination.

The content of the acetal skeleton (a) (or a polymerizable unsaturated bond, for example, a skeleton represented by Formula (a1)) in the PVA-based polymer (A) may be any selected from the range of about 0.001 mol% or greater (for example, 0.005 mol% or greater) per monomer unit, and may be, for example, 0.01 mol% or greater, preferably 0.05 mol% or greater, more preferably 0.1 mol% or greater, or especially preferably 0.2 mol% or greater per monomer unit, and may be 10 mol% or smaller (for example, 8 mol% or smaller (for example, 5 mol% or smaller, 3 mol% or smaller), preferably 2 mol% or smaller, or more preferably 1 mol% or smaller) per monomer unit.

These ranges (upper limits and lower limits) may be selected in combination as appropriate (such as 0.01 to 3 mol% or 0.05 to 5 mol%, hereinafter, the same applies the descriptions regarding ranges).

More specifically, the content of the acetal skeleton (a) (or the polymerizable unsaturated bond) in the PVA-based polymer (A) may be in a range of about 0.05 to 5 mol%, preferably in a range of about 0.1 to 3 mol%, or more preferably in a range of about 0.2 to 2 mol% per monomer unit.

The content of 1 mol% means that one acetal skeleton (a) (for example, a skeleton represented by Formula (a1)) is contained per 100 units of monomer units (total of monomer units such as a vinyl alcohol unit and a vinyl ester unit).

When the content of the acetal skeleton (a) is as above, the fundamental properties of a dispersion stabilizer can be effectively realized (for example, the dispersion stabilizer can provide an excellent polymerization stability, and make it possible to efficiently produce a vinyl chloride-based resin with an appropriate average particle diameter or with an excellent plasticizer absorbability property or the like).

Moreover, when the upper limit of the content of the acetal skeleton (a) is not excessively high, good aqueous solution preparation easiness and aqueous solution storage stability and good hot-water dispersibility can be more easily attained.

Measurement of the content of the acetal skeleton (a) is not particularly limited and can be performed by, for example, NMR-based measurement.

More specifically, for example, the content of the acetal skeleton (a) may be measured in such a way that the PVA-based polymer (A) is dissolved in a d6-DMSO solvent, and the solution thus prepared is measured by ¹H-NMR to analyze a signal derived from a polymerizable unsaturated bond (such as an ethylene double bond) of the acetal skeleton (a).

### Ionic skeleton (b)

The ionic skeleton (b) has an ionic group.

Examples of the ionic group include anionic groups (such as acidic groups (such as a carboxyl group, a sulfonate group (-SO₃H), and a phosphonate group)), cationic groups (such as an amino group, ammonium (an ammonium cation)), and salts thereof (groups formed by salification thereof).

Examples of the salts include, depending on whether the ionic group is anionic or cationic, or the like, metal salts (such as alkali metal salts or alkaline earth metal salts (such as lithium salts, sodium salts, potassium salts, magnesium salts, calcium salts), halides (such as chlorides, bromides, and iodides), and the like.

When the ionic group is a polybasic acid or the like, the ionic group may include salts of the same type or salts of two or more types in combination.

Among these ionic groups, preferable ionic groups are acidic groups (especially, a carboxyl group and a sulfonate group) and salts thereof (salts of acid groups such as carboxylate salts (such as -COOM (where M is an alkali metal such as sodium (or a cation thereof)) or sulfonate salt such as -SO₃M (where M is an alkali metal such as sodium (or a cation thereof)).

The ionic skeleton (b) may be any type of skeletons, provided that the ionic skeleton (b) has an ionic group, and may be, for example, (1) an acetal skeleton (an acetal group, an acetal unit) having an ionic group, (2) a skeleton corresponding to (or derived from) a monomer having an ionic group, (3) other skeleton corresponding to (or derived from) a compound capable of introducing an ionic group (for example, a chain transfer agent (such as an alcohol, a carbonyl compound (an aldehyde or a ketone, especially an aldehyde), or a thiol) having an ionic group), other than these skeletons.

The ionic skeleton (b) (a single ionic skeleton (b)) has at least one ionic group and may have two or more ionic groups.

The PVA-based polymer (A) may contain an ionic skeleton (b) alone or two or more types of the ionic skeletons (b) in combination.

The amount (ratio, content percentage) of the ionic skeleton (b) (for example, the skeletons (1), (2), and/or (3)) contained in the PVA-based polymer (A) may be any content selected from the range of about 0.001 mol% or greater (for example, 0.005 mol% or greater) per monomer unit, and may be, for example, 0.01 mol% or greater, preferably 0.03 mol% or greater, or more preferably 0.05 mol% or greater per monomer unit, and may be 10 mol% or smaller (for example, 8 mol% or smaller (for example, 5 mol% or smaller, or 3 mol% or smaller), preferably 2 mol% or smaller, or more preferably 1 mol% or smaller) per monomer unit.

More specifically, the content of the ionic skeleton (b) (for example, the skeletons (1), (2), and/or (3)) may be in a range of about 0.01 to 5 mol%, preferably in a range of about 0.03 to 2 mol%, or more preferably in a range of about 0.05 to 1 mol% per monomer unit.

The content of 1 mol% means that one ionic skeleton (b) (for example, the skeletons (1), (2), and/or (3)) is contained per 100 units of monomer units (the total of monomer units such as a vinyl alcohol unit and a vinyl ester unit).

With such a content of the ionic skeleton (b), it is easier to improve the aqueous solution preparation easiness, the aqueous solution storage stability, and the hot-water dispersibility of the PVA-based polymer (A).

Moreover, when the upper limit thereof is not excessively high, the PVA-based polymer (A) can be efficiently realized with the fundamental properties of a dispersion stabilizer (for example, the PVA-based polymer (A) can provide an excellent polymerization stability, and make it possible to efficiently produce a vinyl chloride-based resin with an appropriate average particle diameter or with an excellent plasticizer absorbability property or the like).

The measurement of the content of the ionic group may be selected in consideration of various factors such as the type of the skeleton having the ionic group, and may be performed by NMR, titration, UV absorbance-based measurement or the like, but the measurement is not limited thereto.

More specifically, the content of the skeleton represented by the later-described Formula (b 1-1) may be measured in such a way that the PVA-based polymer (A) is dissolved in a d6-DMSO solvent, and the solution thus prepared is measured by ¹H-NMR to analyze a signal derived from a substituent (such as hydrogen) of a benzene ring.

Apart from that, the amount of carboxyl groups can be determined from a titration amount of hydrochloric acid in such a way that a sample prepared by complete saponification of the PVA-based polymer (A) and Soxhlet extraction thereafter (for example, a sample from which sodium acetate has been removed) is dissolved in water with a small amount of sodium hydroxide (NaOH) added therein thereafter, and conductometric titration of the aqueous solution thus prepared is performed with dilute hydrochloric acid.

Moreover, in case where the acetal skeleton having an ionic group has a UV (ultraviolet) absorbing structure, the content of the acetal skeleton having an ionic group can be measured by measuring UV absorbance of an aqueous solution containing the PVA-based polymer (A).

Moreover, the PVA-based polymer (A) may be such that the content of the acetal skeleton (a) (the content thereof per monomer unit) is 50 mol or smaller (for example, 30 mol or smaller, or 20 mol or smaller), preferably 15 mol or smaller, more preferably 10 mol or smaller per mol of the ionic skeleton (b) (for example, the skeletons (1), (2), and/or (3)), and 0.05 mol or greater (for example, 0.1 mol or greater or 0.5 mol or greater), preferably 1 mol or greater, more preferably 2 mol or greater, or especially 3 mol or greater per mol of the ionic skeleton (b) (for example, the skeletons (1), (2), and/or (3)).

When the content ratio is as such, excellent aqueous solution preparation easiness, aqueous solution storage stability, etc. can be easily attained compatibly with excellent fundamental properties that a dispersion stabilizer possesses for dispersion stabilization.

The introduction of the ionic skeleton (b) may be performed by a well-known method, in consideration of the type of the ionic skeleton (b). Examples of such introduction methods include: (1) a method of preparing a PVA-based polymer (B-1) having an ionic group by acetalization of a PVA-based polymer (which may be referred to as a PVA-based polymer (C) herein) with a carbonyl compound (an aldehyde, or an acetal, a ketone, or the like thereof, especially an aldehyde) having an ionic group; (2) a method of preparing a PVA-based polymer (B-2) having an ionic group by preparing a polyvinyl ester-based polymer having an ionic group by copolymerization of a monomer having the ionic group with a vinyl ester, and subsequently performing saponification of the polyvinyl ester-based polymer thus prepared; (3) a method of preparing a PVA-based polymer (B-3) having an ionic group by saponification of a polyvinyl ester-based polymer (having an ionic group) that is obtainable by polymerization of a vinyl ester in the presence of a chain transfer agent (such as an alcohol, an aldehyde, or a thiol) having an ionic group; and the like.

Hereinafter, the types of the ionic skeleton (b) will be described in detail.

### (1) Acetal skeleton having an ionic group

The ionic group is present on the acetal skeleton (an acetal group, an acetal unit) as described above (the ionic group is a substituent of the acetal skeleton).

The acetal may be either a cyclic acetal or an acyclic (chain) acetal and may be preferably a cyclic acetal.

Typical examples of the acetal skeleton having an ionic group include a skeleton (a structural unit) represented by the following Formula (b 1). Thus, the acetal skeleton having an ionic group may include a skeleton represented by the following Formula (b 1): 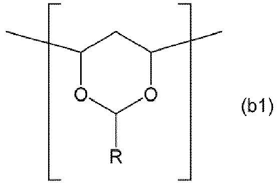 where R is a group having an ionic group.

In Formula (b1), R is a group having an ionic group. R may be the ionic group itself or a linking group having an ionic group (a group including the ionic group and a linking group substituted with the ionic group.)

Examples of the linking group (which is the substituted group) include hydrocarbon groups. Examples of the hydrocarbon groups include: aliphatic hydrocarbon groups and aromatic hydrocarbon groups, where examples of aliphatic hydrocarbon groups include saturated aliphatic hydrocarbon groups such as alkyl groups (such as linear alkyl groups (for example, C_{1 - 30} alky groups such as methyl , ethyl, propyl, butyl, pentyl, hexyl, heptyl, octyl, nonyl, decyl, and undecyl groups), and cycloalkyl groups (for example, C_{3 - 10} cycloalkyl groups such as cyclopentyl and cyclohexyl groups), and example of aromatic hydrocarbon groups include aryl groups (for example, C_{6 - 20} aryl groups such as phenyl, tolyl, xylyl , and naphthyl groups), aralkyl groups (for example, C_{6 - 20} aryl - C_{1 - 4} alkyl groups such as benzyl and phenethyl groups).

The linking group (hydrocarbon group) may have a substituent (a substituent that is not an ionic group) as well as the ionic group. The substituent is not particularly limited and may be, for example, a hydroxy group, a halogen atom, an acyl group, an ester group, an alkoxy group, a nitro group, a group different from the substituted group (for example, an aromatic group such as aryl group), or the like.

The linking group (hydrocarbon group) may have one substituent or two or more types of substituents in combination.

The linking group (such as a hydrocarbon group) having an ionic group is such that the number of ionic groups substituting the linking group is at least one, and the linking group may be substituted with two or more ionic groups.

Specific examples of the acetal skeleton having an ionic group (a skeleton represented by Formula (b1)) include a skeleton represented by Formula (b1) where R is an ionic group (for example, a carboxyl group or a salt thereof), and a skeleton represented by the following Formula (b1-1): 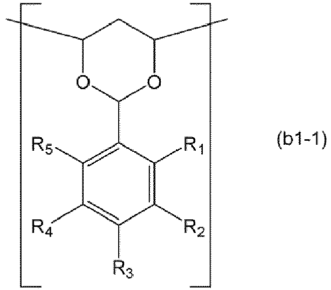 where R₁ to R₅ are independently a hydrogen atom or a substituent, wherein at least one of R₁ to R₅ is an ionic group.

In Formula (b1-1), the ionic group and the substituent may be any of those exemplified above. At least one of R₁ to R₅ is an ionic group, and it is preferable that any one of R₁ to R₅ be an ionic group. Typically, it may be so configured that one of R₁ to R₅ is an ionic group (for example, a carboxyl group, a sulfonate group, or a salt thereof) while the remaining four of R₁ to R₅ are hydrogen atoms.

The acetal skeleton having an ionic group (for example, a group represented by Formula (b1) (or R-< in Formula (b1)) may be one derived from a corresponding carbonyl compound (such as an aldehyde, or an acetal, a ketone, or the like thereof), especially an aldehyde (for example, RCHO). The carbonyl compound may be substituted.

Examples of such a carbonyl compound include aldehydes (especially, monoaldehydes), and ketones, acetals and the like corresponding thereto, such as alkanals having an ionic group (such as alkanals having an acid group or a salt thereof such as glyoxylic acid, formyl acetate, formyl propionate, and salts thereof) and arene carboxaldehydes having an ionic group (such as arene carboxaldehydes having an acid group or a salt thereof such as formylbenzoic acid (for example, 4-formylbenzoic acid) formylbenzenesulfonic acid (such as 2-formylbenzenesulfonic acid and 4-formylbenzene-1,3-disulfonic acid), and salts thereof).

In the cases where the carbonyl compound has isomers such as cis and trans isomers, the examples include all of such isomers (for examples both the cis and trans isomers).

Moreover, in case where the ionic group is formable in the PVA-based polymer (A), the ionic group in the carbonyl compound may be derivatized (such as esterificated, or anhydrated).

For example, an ester (for example, an alkyl ester) or an acid anhydride may be employed, provided that an acid group (a carboxyl group or a sulfonate group) or a salt thereof corresponding to the ester or acid anhydride can be formed in the PVA-based polymer (A) (for example, can be formed by hydrolysis) (hereinafter, the same applies to the ionic group).

These carbonyl compounds may be employed alone or two or more thereof may be employed in combination.

For the sake of water solubility and the like, the carbonyl compound may be preferably a monocarbonyl compound (such as a monoaldehyde). Even in case where a polyvalent carbonyl compound such as a polyvalent aldehyde such as a dialdehyde is employed, it is often such that the polyvalent carbonyl compound content is used in such an amount (e.g., such a small amount) that sufficient water solubility and the like can be ensured.

The acetal skeleton having an ionic group (for example, an acetal skeleton represented by Formula (b 1)) may be a skeleton introduced via a hydroxy group, and, for example, may be an acetal skeleton derived from (introduced via) two adjacent hydroxy groups (for example, hydroxy groups of vinyl alcohol units).

For example, in case where a carbonyl compound having an ionic group (such as an aldehyde, a ketone, or the like) is employed, a PVA-based polymer (A) having an acetal skeleton having an ionic group may be obtained by, for example, acetalizing two adjacent OH groups in a PVA-based polymer with the carbonyl compound having an ionic group.

The acetal skeleton having an ionic group (for example, an acetal skeleton represented by Formula (b1)) may or may not have a polymerizable unsaturated bond.

The PVA-based polymer (A) may or may not have an acetal skeleton having an ionic group.

The PVA-based polymer (A) having an acetal skeleton having an ionic group may have such an acetal skeleton alone or two or more types of such acetal skeletons in combination.

A method of causing the PVA-based polymer (A) to have an acetal skeleton (for example, an acetal skeleton having a carboxyl group, a sulfonate group, or a salt thereof) therein (a method of introducing the acetal skeleton having an ionic group into the PVA-based polymer (A)) is not limited to a particular one and a method widely used in the art may be employed for causing the PVA-based polymer (A) to have an acetal skeleton.

According to a typical method, as described later, a PVA-based polymer (C) may be acetalized with a carbonyl compound having an ionic group (such as an aldehyde, or an acetal, a ketone, or the like thereof).

The acetalization of such a PVA-based polymer (C) with a carbonyl compound having an ionic group as described above can produce a PVA-based polymer (B-1) having the ionic group but may be preferably configured that the acetalization is carried out with a carbonyl compound having a polymerizable unsaturated bond as well as the carbonyl compound having an ionic group, so that the acetalization can prepare, at once, a PVA-based polymer (A) having the acetal skeleton (a) and the ionic group.

Examples of the aldehyde having an ionic group include glyoxylic acid, 2-formylbenzoic acid, 4-formylbenzoic acid, sodium 2-formylbenzenesulfonate, sodium 4-formylbenzenesulfonate, disodium 4-formylbenzene-1,3-disufonate, and the like. 4-formylbenzoic acid and sodium 2-formylbenzenesulfonate, and the like are preferable.

As described above, the carbonyl compound may be an acetal, which is a condensation compound of an aldehyde and an alcohol. The examples of such an acetal include, but not limited to, condensation compounds condensed with a primary alcohol (for example, methanol).

These carbonyl compounds may be employed alone or two or more of types of them may be employed in combination.

### (2) Skeleton corresponding to monomer having an ionic group

The monomer having an ionic group is not limited to a particular kind and may be selected according to the kind of the ionic group as appropriate.

Specific examples of the monomer include: monomers having an acidic group and salts thereof, where examples of the monomers having an acidic group include: monomers having a carboxyl group (such as monocarboxylic acids such as aliphatic unsaturated monocarboxylic acids such as acrylic acid, methacrylic acid, and crotonic acid) and polycarboxylic acids such as aliphatic unsaturated dicarboxylic acids (such as itaconic acid, maleic acid, and fumaric acid); monomers having a sulfonate group (such as alkenylsulfonic acids (such as vinylsulfonic acid and allylsulfonic acid), alkenylarenesulfonic acids (such as styrenesulfonic acid), and amide-based monomers having a sulfonate group (such as 2-acrylamide-2-methylpropanesulfonic acid); monomers having another ionic group (such as monomers having an amino group such as (meth)acrylamide propyl dimethylamine); and the like.

As described above, as long as an ionic group can be introduced in the PVA-based polymer (A) (for example, an ionic group is formed by hydrolysis or the like, so that the PVA-based polymer (A) has the ionic group at least finally), the monomer may be a derivative (such as an acid anhydride (such as maleic anhydride) or an ester (such as an alkyl ester)).

In the other words, such a derivative may be referred to as a derivative from which an ionic group can be formed. Referring to a more specific example, this means that even if an acrylic ester is used, it is sufficient that an acrylic acid or a salt thereof has been introduced in the PVA-based polymer (A) finally obtained. Thus, in such a case, an acrylic ester introduces a skeleton corresponding to an acrylic acid or a salt thereof to the PVA-based polymer (A).

These monomers may be employed alone or two or more types thereof may be employed in combination.

As described above, for example, a PVA-based polymer (B-2) having an ionic group can be obtained by saponification of a polyvinyl ester-based polymer having the ionic group, the polyvinyl ester-based polymer being obtainable by copolymerization of such a monomer having the ionic group with a vinyl ester.

### (3) Other skeletons corresponding to compounds capable of introducing an ionic group

In such a skeleton (3) as above, examples of the compounds capable of introducing an ionic property include, as described above, alcohols having an ionic group, carbonyl compounds (such as aldehydes and ketones, especially aldehydes) having an ionic group, thiols having an ionic group, and the like. In general, these may function as a chain transfer agent as well.

Among these, thiols are preferable for the sake of high chain transferring abilities (therefore, easiness in introducing the ionic group) and the like.

Examples of the thiols having an ionic group include thiols having an acidic group (for example, thiols having a carboxyl group (such as mercapto saturated fatty acids (such as mercaptoalkanoic acids such as 3-mercaptopropionic acid and mercaptosuccinic acid)), thiols having a sulfonate group (such as mercaptoalkanesulfonic acids (such as 3-mercapto-1-propanesulfonic acid)), and salts thereof (such as sodium 3-mercapto-1-propanesulfonate), and the like.

As described above, for example, it is possible to introduce a chain transfer agent-derived ionic group to a terminal of a vinyl ester-based polymer by polymerizing a vinyl ester in the presence of such a chain transfer agent (such as an alcohol, an aldehyde, or a thiol) having an ionic group. By performing saponification of the vinyl ester-based polymer thereafter, it is possible to obtain a PVA-based polymer (B-3) having an ionic group at its terminal.

The PVA-based polymer (A) may have another acetal skeleton (an acetal group, an acetal unit) not belonging to the scope of the acetal skeleton (a) or the acetal skeleton having an ionic group.

Examples of such another acetal skeleton include skeletons represented by Formula (a1) wherein R' is a group (such as an aliphatic group and an aromatic group) having no ionic group or no polymerizable unsaturated bond. Examples of such a group include aliphatic groups (such as alkyl groups (such as C₁₋₃₀ alkyl groups such as methyl, ethyl, propyl, butyl, pentyl, heptyl , octyl, nonyl, decyl, and undecyl groups), cycloalkyl groups (such as C₃₋₂₀ cycloalkyl groups such as cyclopentyl and cyclohexyl groups), and the like), aromatic groups (such as aryl groups (such as C₆₋₂₀ aryl groups (such as phenyl and naphthyl groups), and the like.

The method of introducing such another acetal skeleton is not particularly limited and may be carried out by a method widely used in the art. One example of the method of introducing such another acetal skeleton is a method including acetalizing a PVA-based polymer (C) with an aldehyde corresponding to such another acetal skeleton. Such a method is typically such that another acetal skeleton is formed from two adjacent vinyl alcohol units.

Examples of such an aldehyde include aliphatic aldehydes such as alkanals (such as acetaldehyde, propionaldehyde, butanal, pentanal, hexanal, heptanal, octanal, nonanal, decanal, undecanal, dodecanal, 2-methylbutanal, 2-ethylbutanal, 2-methylpentanal, and 2-ethylhexanal), cycloalkanecarbaldehydes (such as cyclopentanecarboxyaldehyde (cyclopentanecarbaldehyde) and cyclohexanecarbaldehyde (cyclohexanecarbaldehyde), and aromatic aldehydes such as arene carbaldehydes (such as benzaldehyde, and naphthaldehyde).

The PVA-based polymer (A) includes at least a vinyl alcohol unit, but may further include a unit not hydrolyzed (not saponified) with a vinyl alcohol unit (for example, such a unit may be a vinyl ester unit (or a unit derived from a vinyl ester-based monomer, such as a vinyl acetate unit)).

Apart from that, the PVA-based polymer (A) may have another unit (a unit other than the units illustratively described above, such as the vinyl alcohol unit, the unhydrolyzed unit, the acetal skeleton (a), and the ionic skeleton (b)), if necessary. Examples of such a unit include units derived from the other monomers exemplified in the later-described section regarding the PVA-based polymer (C).

The saponification degree of the PVA-based polymer (A) may be, for example, 20 mol% or greater (for example, 25 mol% or greater), preferably 30 mol% or greater (for example, 35 mol% or greater), further preferably 40 mol% or greater (for example, 45 mol% or greater), or especially 50 mol% or greater (for example, 55 mol% or greater, or 60 mol% or greater).

The saponification degree of the PVA-based polymer (A) may have an upper limit of, for example, 95 mol% or less (for example, 93 mol% or less), preferably 90 mol% or less (for example, 88 mol% or less), or more preferably 85 mol% or less (for example, 80 mol% or less).

More specifically, the saponification degree of the PVA-based polymer (A) may be, for example, in a range of 20 to 90 mol% (for example, in a range of 50 to 90 mol%), preferably in a range of 55 to 85 mol%, or more preferably in a range of 60 to 80 mol%.

It is preferable that the saponification degree be not excessively low, because such a saponification degree leads to excellent aqueous solution preparation easiness, excellent aqueous solution storage stability, and excellent hot-water dispersibility. It is preferable that the saponification degree be not excessively high, because such a saponification degree makes it easier to attain excellent fundamental properties that a dispersant possesses for dispersion stabilization (for example, polymerization stability is excellent, and it becomes possible to efficiently produce a vinyl chloride-based resin with an appropriate average particle diameter, a high plasticizer absorbability property), or the like.

The saponification degree (and further the polymerization degree) can be determined by, for example, the testing method for PVA for the saponification degree (and further the polymerization degree) as stipulated under JIS K 6726.

The PVA-based polymer (A) with a vinyl ester unit may be such that the ratio of the ionic skeleton (b) (as monomer units) may be 10 mol or less, preferably 5 mol or less, or further preferably 3 mol or less per 100 mol of the viny ester unit, and 0.01 mol or more (for example, 0.05 mol or more, or 0.1 mol or more), preferably 0.2 mol or more, or more preferably 0.3 mol or more per 100 mol of the viny ester unit.

When the ratio is as such, an excellent aqueous solution preparation easiness, an excellent aqueous solution storage stability, etc. can be easily attained compatibly with the excellent fundamental properties that a dispersion stabilizer possesses for dispersion stabilization.

The (average) polymerization degree of the PVA-based polymer (A) is not particularly limited but may be, for example, 100 or higher (for example, 120 or higher), preferably 150 or higher (for example, 160 or higher), or more preferably 180 or higher (for example, 200 or higher, 220 or higher, 250 or higher, 280 or higher, or 300 or higher), or the like.

The upper limit of the (average) polymerization degree of the PVA-based polymer (A) is not particularly limited, but may be, for example, selected from a range of about 10000 or less (for example, 8000 or less, or 5000 or less), and may be 3000 or less (for example, 2500 or less), preferably 2000 or less (for example, 1500 or less), or more preferably 1000 or less (for example, 800 or less).

More specifically, the (average) polymerization degree of the PVA-based polymer (A) may be, for example, in a range of about 120 to 3000 (for example, about 200 to 2000), preferably about 250 to 1500, or more preferably about 300 to 1000.

The polymerization degree not excessively small is advantageous for the PVA-based polymer (A) in terms of the polymerization stability, inhibition of scale attachment, inhibition of coarsening of the resultant vinyl-based resin, etc. Moreover, the polymerization degree not excessively large is advantageous for the PVA-based polymer (A) in order to attain an excellent aqueous solution preparation easiness, an excellent aqueous solution storage stability, an excellent hot-water dispersibility, etc.

The cloud point of a 4% aqueous solution by mass of the PVA-based polymer (A) is, for example, preferably 20°C or higher (for example, higher than 20°C, 22°C or higher, 23°C or higher, 24°C or higher, or 25°C or higher), or more preferably 27°C or higher, and may be 30°C or higher, or the like.

The cloud point of a 4% aqueous solution by mass of the PVA-based polymer (A) is not particularly limited as to an upper limit, and the upper limit may be, for example, 75°C, 70°C, 65°C, 60°C, 55°C, 50°C, or the like.

Typically, the cloud point of a 4% aqueous solution by mass of the PVA-based polymer (A) may be, for example, in a range of 30 to 50°C, or in the like temperature range.

With such a cloud point, the aqueous solution becomes excellent in preparation easiness and storage stability.

The cloud point of a 44% aqueous solution by mass of the PVA-based polymer (A) can be adjusted by adjusting the saponification degree, the polymerization degree, the content of the ionic skeleton (ionic group), etc. of the PVA-based polymer (A).

### Aqueous liquid

The PVA-based polymer (A) may be used as a dispersion stabilizer (dispersant) etc. in the form as produced or may be used in a form of an aqueous liquid containing the PVA-based polymer (A) dissolved in water.

The aqueous liquid includes the PVA-based polymer (A) and water. The aqueous liquid may be, for example, a dispersion or solution in which the PVA-based polymer (A) as a dispersoid is dispersed or dissolved in water.

The aqueous liquid is not particularly limited as to the content of the PVA-based polymer (A), which may be, for example, about 1% by mass or more (such as 2% by mass or more, or 3% by mass or more), and, for example, about 80% by mass or less (such as 70% by mass or less, 60% by mass or less, 50% by mass or less, 40% by mass or less, or 30% by mass or less).

The aqueous liquid of the present invention has a good stability.

For an improved shelf stability, the aqueous liquid may further comprise a water-soluble organic solvent or the like. Examples of the water-soluble organic solvent include alcohols, such as methanol, ethanol, n-propanol, isopropanol, n-butanol, and isobutanol; esters, such as methyl acetate and ethyl acetate; and glycol derivatives, such as ethylene glycol, ethylene glycol monomethyl ether, and ethylene glycol monoethyl ether; etc. The organic solvents may be also usable in combination of two or more kinds thereof.

In the cases where such a water-soluble organic solvent is included, the percentage of the water-soluble organic solvent relative to the entire solvent may be, for example, 70% by mass or less (for example, 60% by mass or less), preferably 50% by mass or less, or more preferably 30% by mass or less. In particular, from the viewpoints of environmental consciousness and an improved workability, the content of the organic solvent may be preferably 5% by mass or less relative to the whole solvent or the aqueous liquid.

### Production method

The present invention is not particularly limited as to how to produce the PVA-based polymer (A). For example, the PVA-based polymer (A) may be obtained by acetalizing a PVA-based polymer (B) with an aldehyde having a polymerizable unsaturated bond, or the like compound.

For example, the PVA-based polymer (A) may be obtained by performing acetalization reaction of a PVA-based polymer (B-2 or B-3) having an ionic group with a carbonyl compound having a polymerizable unsaturated bond (for example, a monoaldehyde).

Moreover, the PVA-based polymer (A) may be obtained by concurrently performing the acetalization reactions of a PVA-based polymer (C) with a carbonyl compound having a polymerizable unsaturated bond (for example, a monoaldehyde) and with a carbonyl compound having an ionic group (for example, an aldehyde).

Therefore, the production process of the PVA-based polymer (A) includes a step of producing either a PVA-based polymer (C) or a PVA-based polymer (B-2 or B-3) having an ionic group and a step of acetalizing either the PVA-based polymer (C) or the PVA-based polymer (B-2 or B-3) (acetalization step).

The production of such a PVA-based polymer (C) or a PVA-based polymer (B-2 or B-3) having an ionic group is not limited to a particular method and may be performed by a conventionally well-known method.

Hereinafter, the PVA-based polymer (B-2 or B-3) having an ionic group, the PVA-based polymer (C), and the acetalization step will be described in detail.

### PVA-based polymers (B-2), (B-3), and (C)

The PVA-based polymer (C) is not particularly limited, but may be, for example, a PVA-based polymer obtainable by saponification (reaction) of a vinyl ester-based polymer (a saponified vinyl ester-based polymer (a polymer including a vinyl ester-based monomer as its polymer component)).

The PVA-based polymers (B-2) and (B-3) are obtainable respectively by, for example, performing the production of the PVA-based polymer (C) with another monomer, which includes a monomer including an ionic group, and with a chain transfer agent, which includes a chain transfer agent having an ionic group, as described later.

The vinyl ester-based polymer can be obtained by polymerization of at least a vinyl ester-based monomer (polymerizing at least the monomer as a polymer component). The polymerization method is not particularly limited and may be a conventionally known method, for example, bulk polymerization, solution polymerization, suspension polymerization, emulsion polymerization, or the like. In view of the control of the polymerization degree and the saponification after polymerization, solution polymerization using methanol as a solvent and suspension polymerization using water or water/methanol as a dispersion medium are preferred, but the polymerization method is not limited to them.

The vinyl ester-based monomer which can be used in the polymerization is not particularly limited, and examples thereof include vinyl esters of aliphatic acids such as vinyl acetate, vinyl formate, vinyl propionate, vinyl caprate, and vinyl versatate. These vinyl ester-based monomers may be employed alone or two or more of them may be employed. From the industrial viewpoint, vinyl acetate is preferred among them.

The polymerization of the vinyl ester-based monomer may be copolymerization of the vinyl ester-based monomer with another monomer, as long as the effects of the present invention can be attained. In other words, the polymerization components of the vinyl ester-based polymer may include the vinyl ester-based monomer and another monomer.

The examples of such another monomer usable herein include, but not limited to, α-olefins, such as ethylene, propylene, n-butene, and isobutylene; (meth)acrylic acid and salts thereof; (meth)acrylic esters, such as (meth)acrylic alkyl esters (such as C₁₋₂₀ alkyl (meth)acrylates, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate); (meth)acrylamide and (meth)acrylamide derivatives, such as N-methyl(meth)acrylamide, N-ethyl(meth)acrylamide, N,N-dimethyl(meth)acrylamide, and N-methylol(meth)acrylamide; vinyl ethers, such as C₁₋₂₀ alkyl vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allylic compounds, such as allyl acetate and allyl chloride; vinylsilyl compounds, such as vinyltrimethoxysilane; aliphatic alkenylesters, such as isopropenyl acetate; and the like. These as another monomer may be used alone or in combination of two or more kinds thereof.

Here, if said another monomer is another monomer including a monomer having an ionic group, the PVA-based polymer (B-2) can be obtained.

Examples of the monomer having an ionic property includes these exemplified above, such as monomers having an acidic group and salts thereof, where examples of the monomers having an acidic group include: monomers having a carboxyl group (such as monocarboxylic acids such as aliphatic unsaturated monocarboxylic acids such as acrylic acid, methacrylic acid, and crotonic acid) and polycarboxylic acids such as aliphatic unsaturated dicarboxylic acids (such as itaconic acid, maleic acid, and fumaric acid); monomers having a sulfonate group (such as alkenylsulfonic acid (such as vinylsulfonic acid and allylsulfonic acid), alkenylarenesulfonic acid (such as styrenesulfonic acid), and amide-based monomers having a sulfonate group (such as 2-acrylamide-2-methylpropanesulfonic acid); monomers having another ionic group (such as monomers having an amino group such as (meth)acrylamide propyl dimethylamine); and the like.

In case where such another monomer is employed, the content of such another monomer may be selected as appropriate in consideration of the monomers employed or the other factor, and may be, for example, in a range of 0.1 to 20% by mass, or in a similar range, for example, relative to the total amount of the polymerization components.

The polymerization of the vinyl ester-based monomer may be performed in the presence of a chain transfer agent for the purpose of the control of the polymerization degree of the resulting vinyl ester-based polymer, or the like.

The chain transfer agent is not particularly limited, and examples thereof include aldehydes, such as acetaldehyde, propionaldehyde, butyraldehyde, and benzaldehyde; ketones, such as acetone, methyl ethyl ketone, hexanone, and cyclohexanone; mercaptans, such as 2-hydroxyethanethiol, dodecylmercaptan, 3-mercaptopropionic acid, mercaptosuccinic acid, and sodium 3-mercapto-1-propanesulfonate; and organic halides, such as carbon tetrachloride, trichloroethylene, and perchloroethylene. Among them, aldehydes and ketones may be preferably usable.

Here, if the chain transfer agent is a chain transfer agent including a chain transfer agent having an ionic group, it is possible to obtain a PVA-based polymer (B-3).

Examples of the chain transfer agent having an ionic group include these exemplified above, such as alcohols having an ionic group, carbonyl compounds having an ionic group, thiols having an ionic group such as thiols having an acidic group (such as thiols having a carboxyl group (such as mercapto saturated fatty acids (such as mercaptoalkanoic acids such as 3-mercaptopropionic acid and mercaptosuccinic acid)), thiols having a sulfonate group (such as mercaptoalkanesulfonic acids such as 3-mercapto-1-propanesulfonic acid)), and salts thereof (such as sodium 3-mercapto-1-propanesulfonate), and the like.

The content of the chain transfer agent added is decided as appropriate in consideration of the chain transfer constant of the chain transfer agent added and the targeted polymerization degree of the vinyl ester-based polymer. Typically, it is preferable that the content of the chain transfer agent be in a range of 0.1 to 10% by mass relative to the total amount of the polymer components.

A PVA-based polymer (C) (and (B-2) or (B-3)) can be produced by subjecting the vinyl ester-based polymer obtained as described above to saponification.

The saponification method of the vinyl ester-based polymer is not particularly limited and may be a conventionally known method. For example, the saponification may be carried out by alcoholysis or hydrolysis with a hydroxide of an alkali metal and an acidic catalyst such as an inorganic acid or an organic acid, where examples of the hydroxide of the alkali metal include sodium hydroxide and potassium hydroxide, examples of the inorganic acid include hydrochloric acid, sulfuric acid, nitric acid, and phosphoric acid, and examples of the organic acid include formic acid, acetic acid, oxalic acid, and p-toluenesulfonic acid.

Examples of the solvent used in the saponification include alcohols, such as methanol and ethanol; esters, such as methyl acetate and ethyl acetate; ketones, such as acetone and methyl ethyl ketone; aromatic hydrocarbons, such as benzene and toluene, and these can be used alone or in combination of two kinds or more.

### Acetalization

The acetalization of the PVA-based polymer ((C), (B-2), or (B-3)) with a carbonyl compound (such as aldehyde) having a polymerizable unsaturated bond or with a carbonyl compound having an ionic group is not particularly limited as to its method and may be carried out by a well-known acetalization method.

The acetalization of the PVA-based polymer (C) with a carbonyl compound having a polymerizable unsaturated bond and a carbonyl compound having an ionic group can provide a PVA-based polymer (A-1).

Moreover, the acetalization of the PVA-based polymer (B-2 or B-3) having an ionic group with a carbonyl compound having a polymerizable unsaturated bond can provide a PVA-based polymer (A-2 or A-3).

The acetalization is not particularly limited as to the content of the carbonyl compound and the content of the carbonyl compound may be, for example, in a range of approximately 0.05 to 50 parts by mass, preferably in a range of approximately 0.1 to 20 parts by mass, or more preferably in a range of approximately 0.2 to 10 parts by mass, relative to 100 parts by mass of the PVA-based polymer.

Moreover, the acetalization may be preferably carried out in the presence of an acidic catalyst. The acidic catalyst is not particularly limited, and examples thereof include: inorganic acids such as hydrochloric acid, sulfuric acid, nitric acid, and phosphoric acid; organic acids such as formic acid, acetic acid, oxalic acid, and p-toluenesulfonic acid; etc.

The amount of the acidic catalyst used is not particularly limited, and is, for example, in a range of 0.1 to 10 parts by mass relative to 100 parts by mass of the PVA-based polymer.

Specific examples of the method of the acetalization include: (i) a method including: saponifying a vinyl ester-based polymer in a solvent such as methanol under a basic catalyst such as sodium hydroxide so as to prepare a solution of a PVA-based polymer; thereafter, performing acetalization of the PVA-based polymer with an aldehyde or the like and an acidic catalyst added therein; and, thereafter, neutralizing the acetalized PVA-based polymer with a basic substance so as to obtain a solution of a PVA-based polymer (A); (ii) a method including: saponifying a vinyl ester-based polymer in a solvent such as methanol in the presence of an acidic catalyst as a saponification catalyst so as to prepare a PVA-based polymer; thereafter, performing acetalization of the PVA-based polymer with an aldehyde or the like added therein and the acidic catalyst having been used in the saponification; and, thereafter, neutralizing the acetalized PVA-based polymer with a basic substance so as to obtaining a solution of a PVA-based polymer (A); (iii) a method including: concurrently performing saponification and acetalization of a vinyl ester-based polymer in a solvent in the presence of an acidic catalyst and an aldehyde or the like; and, thereafter, neutralizing the resultant with a basic substance so as to obtain a solution of a PVA-based polymer (A); (iv) a method including: adding an aldehyde or the like to an aqueous liquid of a PVA-based polymer; reacting the PVA-based polymer with the aldehyde or the like in the presence of an acidic catalyst; and, thereafter, neutralizing the resultant of the reaction with a basic substance so as to obtain an aqueous liquid of a PVA-based polymer (A); (v) a method including: adding an aldehyde or the like to a slurry or powdery PVA-based polymer by adding the aldehyde or the like directly or adding a solution of the aldehyde or the like dissolved or dispersed in an organic solvent or water; reacting the PVA-based polymer with the aldehyde or the like in the presence of an acidic catalyst; thereafter, neutralizing the resultant of the reaction with a basic substance; and removing an excess solvent therefrom so as to obtain a PVA-based polymer (A); etc.

In the methods (i) to (iii), the solvent may be dried off thereafter, thereby obtaining the PVA-based polymer (A) in a solid form, or the solvent may be replaced with water, thereby obtaining an aqueous liquid of the PVA-based polymer (A).

With the method (iv), which provides the PVA-based polymer (A) as an aqueous liquid, the aqueous liquid of the PVA-based polymer (A) as such can be used in suspension polymerization of vinyl chloride, etc.

With the method (v) in which the reaction is carried out with the slurry of the PVA-based polymer, the PVA-based polymer (A) is obtained in a solid form, which is easy to handle.

The methods (i) to (v) are not particularly limited as to how to prepare the aqueous liquid of the PVA-based polymer, and how to perform the saponification, neutralization, dissolving, dispersing, and drying, and methods widely used in the art may be adopted to perform these.

Moreover, the basic substance for the neutralization is not particularly limited and may be, for example, an alkali metal hydroxide or the like such as sodium hydroxide or potassium hydroxide.

Regarding the pH of a reaction liquid for the acetalization, it is preferable that the pH of the reaction liquid be 3.0 or less, or more preferably 1.0 or less from the viewpoint of reaction rate. Moreover, it is preferable that the pH of the reaction liquid after the neutralization be in a range of 4.7 to 9.0, or more preferably in a range of 7.0 to 8.5.

### Use, production method, etc., of vinyl-based polymer

The PVA-based polymer (A) is applicable to various types of use such as dispersants, and film applications, and especially preferably applicable to a dispersion stabilizer (or a dispersant, for example, a dispersion stabilizer (a dispersant) for polymerization (such as suspension polymerization), as described above.

Therefore, in the following, the use of the dispersion stabilizer (or the PVA-based polymer (A), and so forth) according to the present invention, and a production method for producing a vinyl-based polymer by polymerization (especially, suspension polymerization) of a vinyl-based monomer in the presence of the dispersion stabilizer will be described.

The suspension polymerization in the present invention is a polymerization method in which, to an aqueous solvent, a vinyl-based monomer insoluble therein and an oil-soluble polymerization initiator are added, the mixture is stirred for formation of fine droplets containing the vinyl-based monomer, and polymerization is performed in the droplets. The aqueous solvent used herein is not particularly limited, and examples thereof include water, an aqueous solution containing an additional component of any type, a mixed solvent of water and a water-compatible organic solvent, and the like.

The PVA-based polymer (A) in the present invention can be used as a dispersion stabilizer in suspension polymerization of a vinyl-based monomer. The vinyl-based monomer is not particularly limited, and preferable examples thereof include vinyl-based monomers to which suspension polymerization is generally applied, such as vinyl chloride, vinylidene chloride, styrene, an acrylic ester, a methacrylate ester, vinyl acetate, and acrylonitrile. Among them, a vinyl chloride-based monomer is particularly preferred.

Examples of the vinyl chloride-based monomer include a vinyl chloride monomer (vinyl chloride), and a mixture of vinyl chloride monomer and another kind of monomer co-polymerizable with the vinyl chloride monomer. Examples of said another kind of monomer co-polymerizable with the vinyl chloride monomer include monomers such as vinylidene chloride, vinyl acetate, ethylene, propylene, acrylic acid, an acrylic ester, methacrylic acid, a methacrylate ester, styrene, a vinylalkoxysilane, maleic acid, hydroxyalkyl acrylate, allyl sulfonic acid, and vinyl sulfonic acid.

Therefore, the dispersion stabilizer of the present invention can be suitably used in suspension polymerization of a vinyl-based monomer such as a vinyl chloride-based monomer (especially, vinyl chloride), especially in homopolymerization of vinyl chloride by suspension polymerization. Moreover, the dispersion stabilizer of the present invention can be used in binary copolymerization or multicomponent copolymerization by suspension polymerization of vinyl chloride with one or more monomers selected from publicly known monomers co-polymerizable with vinyl chloride. Among the above, the dispersion stabilizer can be suitably used in, in particular, copolymerization of vinyl chloride with vinyl acetate by suspension polymerization.

By suspension polymerization of a vinyl-based monomer comprising vinyl chloride, a vinyl chloride-based resin can be obtained. In the production of the vinyl chloride-based resin, the vinyl chloride content is preferably 50 to 100 mol% (or 50 to 100% by mass) relative to the total amount of the vinyl-based monomer used.

The polymerization initiator in suspension polymerization of a vinyl-based monomer may also be a publicly known one, and examples thereof include: percarbonate compounds, such as diisopropyl peroxydicarbonate, di-(2-ethylhexyl)peroxydicarbonate, and diethoxyethyl peroxydicarbonate; perester compounds, such as benzoyl peroxide, t-butyl peroxyneodecanoate, α-cumyl peroxyneodecanoate, and t-butyl peroxydecanoate; peroxides, such as acetyl cyclohexylsulfonyl peroxide and 2,4,4-trimethylpentyl-2-peroxyphenoxyacetate; azo compounds, such as 2,2'-azobisisobutyronitrile, azobis(2,4-dimethylvaleronitrile), and azobis(4-methoxy-2,4-dimethylvaleronitrile); benzoyl peroxide; lauroyl peroxide; and the like. Moreover, these compounds are also usable in combination with potassium persulphate, ammonium persulphate, hydrogen peroxide, or the like.

The main role of a dispersion stabilizer in suspension polymerization of a vinyl-based monomer is to stabilize droplets comprising the vinyl-based monomer and a polymer thereof, thereby facilitating prevention of the generation of large aggregates caused due to inter-droplet fusion of polymer particles formed in the droplets. The dispersion stabilizer of the present invention is excellent in dispersion performance, and therefore the use of the dispersion stabilizer even in a small amount allows formation of stable droplets, facilitating prevention of the generation of aggregates caused by the fusion.

Stabilization of droplets means that fine droplets substantially uniform in size are stably dispersed in a dispersion medium for suspension polymerization.

In suspension polymerization of a vinyl-based monomer, the amount of the dispersion stabilizer of the present invention (or the PVA-based polymer (A)) is not particularly limited, but is usually 5 parts by mass or less, preferably 0.005 to 1 part by mass, and further preferably 0.01 to 0.2 parts by mass relative to 100 parts by mass of the vinyl-based monomer. Typically, the dispersion stabilizer of the present invention may be dissolved in a dispersion medium for suspension polymerization by a conventional method before addition of a vinyl-based monomer, as in the case with a conventional dispersion stabilizer.

In suspension polymerization of a vinyl-based monomer, the dispersion stabilizer of the present invention may be used alone or in combination with another kind of dispersion stabilizer. Examples of said another kind of dispersion stabilizer include publicly known dispersion stabilizers used in suspension polymerization of a vinyl-based monomer, such as vinyl chloride, in an aqueous solvent: for example, PVAs and modified PVA-based polymers other than the dispersion stabilizer of the present invention, whose average polymerization degree is in a range of 100 to 4500 and saponification degree in a range of 30 to 100 mol%; water-soluble cellulose ethers, such as methylcellulose, hydroxyethylcellulose, and hydroxypropylcellulose; water-soluble polymers, such as gelatin; oil-soluble emulsions, such as sorbitan monolaurate, sorbitan trioleate, glycerin tristearate, and an ethylene oxide-propylene oxide block polymer; water-soluble emulsifiers, such as polyoxyethylene glycerin olate and sodium laurate; and the like. Of said another dispersing agents, one kind thereof may be employed, or two or more kinds thereof may be employed in combination.

In the present invention, it is preferable to use, as the dispersion stabilizer, a combination of two or more kinds of PVA-based polymers having different polymerization degrees and saponification degrees, of which one or more kinds are preferably the PVA-based polymers (A) as the dispersion stabilizers of the present invention. More preferably, a PVA-based polymer having a polymerization degree of 1700 or more and a high dispersion stability and a PVA-based polymer having a polymerization degree of 1000 or less are used in combination, and one or more kinds of them are the PVA-based polymers (A) of the present invention.

In the suspension polymerization with use of the dispersion stabilizer of the present invention, various kinds of publicly known dispersion aids can be usable in combination with the dispersion stabilizer. As such a dispersion aid, a PVA having a low saponification degree of preferably 30 to 60 mol%, more preferably 35 to 55 mol%, may be used. The dispersion aid is preferably a PVA having an average polymerization degree of preferably 160 to 900 and more preferably 200 to 500.

Apart from the dispersion aid, various kinds of publicly known additives usable in suspension polymerization of a vinyl-based compound, such as a chain transfer agent, a polymerization inhibitor, a pH adjuster, a scale inhibitor, and a cross linking agent, may be usable in combination with the dispersion stabilizer of the present invention.

The polymerization temperature in suspension polymerization is not limited and can be selected depending on the kind of the vinyl-based monomer used, the intended polymerization degree of the polymer, the intended polymerization yield, and the like, but usually, the polymerization temperature is preferably 40 to 70°C. The polymerization time is also not particularly limited, and is only required to be appropriately set depending on the intended polymerization yield, and the like.

The vinyl-based polymer obtainable by the production method of the present invention as described above is processible into various molded products and the like. In particular, the vinyl chloride-based resins are efficiently producible with average particle diameters in an appropriate range and with excellent plasticizer absorbability property, and, in many cases, have good processibility into various molded products.

### EXAMPLES

Hereinafter, the present invention will be illustrated in more detail by Examples, but the present invention is not limited thereto.

In the Examples and Comparative Example, "%" and "parts" express "% by mass" and "part(s) by mass" unless otherwise stated.

To begin with, a measurement method of cloud points of PVA aqueous solutions and an evaluation method of storage stability of the PVA aqueous solutions, and an evaluation method of vinyl chloride polymers (vinyl chloride resins) in Examples will be described below.

### Measurement method of cloud point of PVA aqueous solution

A 4% PVA aqueous solution at a temperature of 20°C was introduced in a quartz cell with an optical path length of 1 mm, and transmittance of the sample at 430 nm was measured continuously while elevating the temperature of the sample from the temperature of 20°C at a temperature elevation rate of 2°C/ min. A temperature at which the transmittance reached 50% relative to a blank (pure water) was recorded as the cloud point.

### Evaluation method of storage stability of PVA aqueous solution

A beaker with a 4% PVA aqueous solution therein was placed in a constant-temperature water bath kept at a temperature of 30°C, and a state of the aqueous solution was visually observed 24 hours later and evaluated according to the following criteria.
Good: The aqueous solution was still homogeneous.
Poor: The aqueous solution was separated into two layers.

### Evaluation method of vinyl chloride polymer

Vinyl chloride polymers were evaluated in terms of the average particle diameter, plasticizer absorbability property, and amounts of attached scales as below.

### Average particle diameter

Average particle diameters were determined by measuring a particle size distribution by using a Ro-Tap Sieve Shaker (using JIS sieves).

### Plasticizer absorbability property

In a cylindrical container having glass fibers packed in the bottom, the obtained resin was placed, and excess dioctyl phthalate (hereinafter abbreviated as DOP) was added thereto. The resin was left to stand for 30 minutes for infiltration of the DOP into the resin and subjected to centrifugal separation at 3000 rpm for removal of excess DOP. Then, the weight of the resin was measured to calculate the amount of the DOP absorbed into 100 parts of the polymer. A larger amount of absorbed DOP means a higher plasticizer absorbability property, and a higher molding processability of the resin.

### Amount of attached scales

After the polymer slurry was discharged from the polymerization vessel, the scale adhesion on the inner wall of the polymerization vessel was visually observed and evaluated based on the following criteria.
Excellent: No or substantially no scale adhesion was observed.
Good: Less scale adhesion was observed.
Poor: Remarkable adhesion of white scale was observed.

### Example 1

### Synthesis of PVA-based polymer (C)

In a reaction tank provided with a stirrer, a condenser, a nitrogen gas introduction port, and an initiator feeding port, 55 parts of methanol and 45 parts of a vinyl acetate monomer were placed, and the system was heated to 60°C while nitrogen gas was passed through the system. To the mixture, 5 parts of a 1% solution of 2,2'-azobis(2,4-dimethylvaleronitrile) (ADVN) in methanol was added as an initiator and polymerization was initiated.

During the polymerization, the system was maintained at a temperature of 60°C, and 90 parts of a vinyl acetate monomer was continuously added to the mixture over 4 hours from the polymerization initiation while nitrogen gas was passed through the system. At each of 1-hour and 2-hour time points from the polymerization initiation, 1 part of a 1% solution of ADVN in methanol was added therein. When the reaction yield of vinyl acetate reached 85%, the system was cooled and the polymerization was terminated. The residual vinyl acetate monomer was evaporated off while methanol vapor was added to the obtained reaction product, so that a 50% solution of polyvinyl acetate in methanol was obtained.

Next, to 100 parts of the above-obtained 50% solution of polyvinyl acetate in methanol, 14 parts of methyl acetate and 5 parts of a 3% solution of sodium hydroxide in methanol were added. The mixture was stirred well and subjected to saponification at a temperature of 40°C. The obtained gelatinous substance was crushed to pieces, neutralized with acetic acid, and then dried to give powder of a PVA-based polymer (C) having a saponification degree of 71 mol%, and an average polymerization degree of 600, as determined by the analysis.

### Synthesis of the PVA-based polymer (A-1)

In a mixture solvent of 150 parts of methanol and 300 parts of methyl acetate, 100 parts of the powder of the PVA-based polymer (C) thus obtained above was immersed, and 10 parts of a 10% solution of 4-formylbenzoic acid in methanol and 0.8 parts of acrolein were added thereto, thereby preparing a mixture. The mixture was reacted at a temperature of 50°C for 1 hour. After 5 parts of a 50% solution of p-toluenesulfonic acid in methanol was added thereto, the mixture was reacted at a temperature of 50°C for 1 hour.

Thereafter, the resultant was neutralized with 10 parts of a 5% solution of sodium hydroxide in methanol. The pH after the neutralization was 7.5.

After the solvent was removed from the resultant by centrifugal separation, the resultant was dried at a temperature of 80°C under a nitrogen atmosphere for 5 hours, thereby obtaining a PVA-based polymer (A-1). The analysis of the PVA-based polymer (A-1) showed that the PVA-based polymer (A-1) had a saponification degree of 72 mol% and a polymerization degree of 600, and the cloud point of the 4% aqueous solution thereof was 35°C. The saponification degree and the polymerization degree were measured according to the methods stipulated under JIS K 6726.

Moreover, the PVA-based polymer (A-1) was dissolved in a d6-DMSO solvent and subjected to ¹H-NMR spectroscopy, which observed signals of double bond protons derived from acrolein at 5.8 ppm, 5.4 ppm, and 5.2 ppm, and signals of aromatic protons derived from 4-formylbenzoic acid at 7.8 ppm and 7.5 ppm. From the strengths of the signals, it was determined that the content of acrolein was 0.5 mol%, and the content of 4-formylbenzoic acid was 0.1 mol%. The 4% PVA aqueous solution thereof was still homogeneous even after being kept at 30°C for 24 hours.

### Suspension polymerization of vinyl chloride

Using the above-obtained PVA-based polymer (A-1) as a dispersion stabilizer, suspension polymerization of vinyl chloride was performed on the conditions shown below.

In a pressure-proof stainless vessel for polymerization, 120 parts of deionized water and 1.5 parts of the 4% aqueous solution of the above-obtained PVA-based polymer (A-1) (0.06 parts of the PVA-based polymer (A-1) per 100 parts of a vinyl chloride monomer) were placed. The pressure inside the vessel was reduced with a vacuum pump to 50 mmHg for deaeration, 100 parts of a vinyl chloride monomer was added, and 0.06 parts of t-butyl peroxyneodecanoate was further added as a polymerization initiator. The resulting mixture was stirred, and the temperature was raised. Suspension polymerization was performed while the content temperature in the polymerization vessel was maintained at a temperature of 57°C, and at the time when the polymerization conversion rate of the vinyl chloride reached 88%, the polymerization was terminated. The unreacted monomer was collected with a vacuum trap, and then a polymer slurry was discharged from the polymerization vessel, dewatered, and dried to give a vinyl chloride polymer (a vinyl chloride resin).

### Examples 2 to 18, Reference Examples 1 to 3

PVA-based polymers (A-1) listed on Table 1 were synthesized as in Example 1, except that the polymerization conditions, the saponification conditions, the kind and amount of the aldehyde used in the acetalization reaction, and the like were changed accordingly.

Using the PVA-based polymers (A-1) thus obtained, suspension polymerization of vinyl chloride was performed as in Example 1, thereby obtaining vinyl chloride polymers.

In Reference Example 1, in which the acetalization reaction was not performed, a PVA-based polymer (C) was used in place of the PVA-based polymer (A-1) (that is, the PVA-based polymer (C) and the PVA-based polymer (A-1) play the same role).

All the results of evaluation of the PVA-based polymers (A-1) and the vinyl chloride polymers obtained therefrom are shown on Table 1.

**TABLE 1**

| | PVA-based Polymer (A-1) | | | | | | Evaluation of Properties of Aqueous Solution | | Evaluation of Vinyl Chloride Resin | | |
|---|---|---|---|---|---|---|---|---|---|---|---|
| | Ionic Skeleton (b) | | Acetal Skelton (a) | | PD | SD | | | | | |
| | Aldehyde 1 | Content | Aldehyde 2 | Content | | | Storage Stability | Cloud Point | Ave. Particle Diameter | Scale Adhesion | Plasticizer absorbability property |
| | | mol% | | mol% | | mol% | | °C | µm | | % |
| Ex.1 | 4-Formylbenzoic Acid | 0.1 | Acrolein | 0.5 | 600 | 72 | Good | 35 | 135 | Not Observed | 22 |
| Ex.2 | 4-Formylbenzoic Acid | 0.1 | Methacrolein | 0.5 | 600 | 72 | Good | 33 | 127 | Not Observed | 22 |
| Ex.3 | 4-Formylbenzoic Acid | 0.1 | Cinnamaldehyde | 0.5 | 600 | 72 | Good | 30 | 123 | Not Observed | 23 |
| Ex.4 | 4-Formylbenzoic Acid | 0.1 | 10-Undecenal | 0.5 | 600 | 72 | Good | 30 | 133 | Not Observed | 24 |
| Ex.5 | 4-Formylbenzoic Acid | 0.1 | 2,4-Hexadienal | 0.5 | 600 | 72 | Good | 34 | 125 | Not Observed | 22 |
| Ex.6 | 4-Formylbenzoic Acid | 0.05 | Acrolein | 0.5 | 600 | 72 | Good | 30 | 138 | Not Observed | 25 |
| Ex.7 | 4-Formylbenzoic Acid | 0.5 | Acrolein | 0.5 | 600 | 72 | Good | 50 or more | 132 | Not Observed | 20 |
| Ex.8 | 4-Formylbenzoic Acid | 0.1 | Acrolein | 0.2 | 600 | 72 | Good | 50 or more | 145 | Not Observed | 21 |
| Ex.9 | 4-Formylbenzoic Acid | 0.1 | Acrolein | 2.0 | 600 | 72 | Good | 27 | 122 | Not Observed | 21 |
| Ex.10 | 2-Formylbenzenesulfonic Acid | 0.05 | Acrolein | 0.5 | 600 | 72 | Good | 31 | 132 | Not Observed | 22 |
| Ex.11 | 2-Formylbenzenesulfonic Acid | 0.1 | Acrolein | 0.5 | 600 | 72 | Good | 35 | 137 | Not Observed | 22 |
| Ex.12 | 2-Formylbenzenesulfonic Acid | 0.5 | Acrolein | 0.5 | 600 | 72 | Good | 50 or more | 142 | Not Observed | 21 |
| Ex.13 | 2-Formylbenzenesulfonic Acid | 0.1 | Cinnamaldehyde | 0.5 | 600 | 72 | Good | 33 | 135 | Not Observed | 23 |
| Ex.14 | Glyoxylic Acid | 0.2 | Acrolein | 0.5 | 600 | 72 | Good | 28 | 138 | Not Observed | 23 |
| Ex.15 | 4-Formylbenzoic Acid | 0.1 | Acrolein | 0.5 | 300 | 72 | Good | 40 | 135 | Not Observed | 25 |
| Ex.16 | 4-Formylbenzoic Acid | 0.1 | Acrolein | 0.5 | 1800 | 72 | Good | 29 | 133 | Not Observed | 20 |
| Ex.17 | 4-Formylbenzoic Acid | 0.5 | Acrolein | 0.5 | 600 | 62 | Good | 29 | 136 | Not Observed | 24 |
| Ex.18 | 4-Formylbenzoic Acid | 0.1 | Acrolein | 0.5 | 600 | 80 | Good | 50 or more | 137 | Not Observed | 20 |
| Ref. Ex. 1 | - | - | - | - | 600 | 65 | Poor | Less than 20 | 189 | Observed | 17 |
| Ref. Ex. 2 | - | - | Acrolein | 0.5 | 600 | 72 | Poor | Less than 20 | 153 | Observed | 18 |
| Ref. Ex. 3 | - | - | Cinnamaldehyde | 0.5 | 600 | 72 | Poor | Less than 20 | 155 | Observed | 18 |

| | | | | | | | | | | | |
|---|---|---|---|---|---|---|---|---|---|---|---|
| Abbreviations: Ex. stands for "Example." Ref. Ex. stands for "Reference Example." PD stands for "Polymerization Degree." SD stands for "Saponification Degree." AV. stands for "Average." | | | | | | | | | | | |

As shown in the table, the PVA-based polymers (A-1) thus obtained in Examples 1 to 18 were good in aqueous solution preparation easiness and aqueous solution storage stability, and hot-water dispersibility. Moreover, when used in the suspension polymerization of vinyl chloride, the PVA-based polymers (A-1) thus obtained in Examples 1 to 18 showed excellent polymerization stabilities, so that vinyl chloride resins with average particle diameters within an appropriate range and large plasticizer absorbability properties were successfully obtained.

### Example 19

### Synthesis of PVA-based polymer (B-2)

In a reaction tank provided with a stirrer, a condenser, a nitrogen gas introduction port, and an initiator feeding port, 55 parts of methanol and 45 parts of a vinyl acetate monomer were placed, and the system was heated to 60°C while nitrogen gas was passed through the system. To the mixture, 6 parts of a 1% solution of 2,2'-azobis(2,4-dimethylvaleronitrile) (ADVN) in methanol was added as an initiator and polymerization was initiated.

During the polymerization, the system was maintained at a temperature of 60°C, and 90 parts of a vinyl acetate monomer and 2 parts of a 20% solution of itaconic acid in methanol were continuously added to the mixture over 4 hours from the polymerization initiation while nitrogen gas was passed through the system. At each of 1-hour and 2-hour time points from the polymerization initiation, 1.2 parts of a 1% solution of ADVN in methanol was added therein. When the reaction yield of vinyl acetate reached 85%, the system was cooled and the polymerization was terminated. The residual vinyl acetate monomer was evaporated off while methanol vapor was added to the obtained reaction product, so that a 50% solution of polyvinyl acetate in methanol was obtained.

Next, to 100 parts of the above-obtained 50% solution of polyvinyl acetate in methanol, 14 parts of methyl acetate and 6 parts of a 3% solution of sodium hydroxide in methanol were added. The mixture was stirred well and subjected to saponification at a temperature of 40°C. The obtained gelatinous substance was crushed to pieces, neutralized with acetic acid, and then dried to give powder of a PVA-based polymer (B-2) having a saponification degree of 71 mol%, and an average polymerization degree of 600 with the content of itaconic acid of 0.2 mol%, as determined by the analysis.

### Synthesis of PVA-based polymer (A-2)

A PVA-based polymer (A-2) shown on Table 2 was synthesized as in Example 1, except that the acetalization reaction was performed, using only acrolein as the aldehyde used therein.

### Suspension polymerization of vinyl chloride

Using the PVA-based polymer (A-2) thus obtained, suspension polymerization of vinyl chloride was performed as in Example 1, thereby obtaining a vinyl chloride polymer.

### Examples 20 to 24 and Reference Examples 4 and 5

PVA-based polymers (A-2) shown on Table 2 were synthesized as in Example 19, except that various conditions were changed as appropriate.

Using the PVA-based polymers (A-2) thus obtained, suspension polymerization of vinyl chloride was performed as in Example 1, thereby obtaining vinyl chloride polymers.

In Reference Examples 4 and 5, in which the acetalization reaction was not performed, PVA-based polymers (B-2) were used in place of the PVA-based polymers (A-2) (that is, the PVA-based polymers (B-2) and the PVA-based polymers (A-2) play the same role).

All the results of evaluation of the PVA-based polymers (A-2) and the vinyl chloride polymers obtained therefrom are shown on Table 2. In the table, "AMPS" means sodium 2-acrylamide-2-methylpropanesulfonate.

**TABLE 2**

| | PVA-based Polymer (A-2) | | | | | | Evaluation of Properties of Aqueous Solution | | Evaluation of Vinyl Chloride Resin | | |
|---|---|---|---|---|---|---|---|---|---|---|---|
| | Ionic Skeleton (b) | | Acetal Skeleton (a) | | PD | SD | | | | | |
| | Monomer having an ionic group | Content | Aldehyde | Content | | | Storage Stability | Cloud Point | Ave. Particle Diameter | Scale Adhesion | Plasticizer absorbability property |
| | | mol% | | mol% | | mol% | | °C | µm | | % |
| Ex. 19 | Itaconic Acid | 0.2 | Acrolein | 0.5 | 600 | 72 | Good | 35 | 130 | Not Observed | 22 |
| Ex. 20 | Itaconic Acid | 0.2 | Cinnamaldehyde | 0.5 | 600 | 72 | Good | 30 | 129 | Not Observed | 23 |
| Ex. 21 | Acrylic Acid | 0.2 | Acrolein | 0.5 | 600 | 72 | Good | 30 | 136 | Not Observed | 22 |
| Ex. 22 | Monomethyl Maleate | 0.2 | Acrolein | 0.5 | 600 | 72 | Good | 32 | 134 | Not Observed | 22 |
| Ex. 23 | Sodium Allylsulfonate | 0.4 | Acrolein | 0.5 | 600 | 72 | Good | 50 or more | 146 | Not Observed | 21 |
| Ex. 24 | AMPS | 0.2 | Acrolein | 0.5 | 600 | 72 | Good | 50 or more | 148 | Not Observed | 20 |
| Ref. Ex. 4 | Itaconic Acid | 0.2 | - | - | 600 | 72 | Good | 50 or more | 182 | Not Observed | 17 |
| Ref. Ex. 5 | AMPS | 0.2 | - | - | 600 | 72 | Good | 50 or more | 199 | Not Observed | 16 |

| | | | | | | | | | | | |
|---|---|---|---|---|---|---|---|---|---|---|---|
| Abbreviations: Ex. stands for "Example." Ref. Ex. stands for "Reference Example." PD stands for "Polymerization Degree." SD stands for "Saponification Degree." AV. stands for "Average." | | | | | | | | | | | |

As shown in the table, the PVA-based polymers (A-2) thus obtained in Examples 19 to 24 were good in aqueous solution preparation easiness, aqueous solution storage stability, and hot-water dispersibility. Moreover, when used in the suspension polymerization of vinyl chloride, the PVA-based polymers (A-2) thus obtained in Examples 19 to 24 showed excellent polymerization stabilities, so that vinyl chloride resins with average particle diameters within an appropriate range and large plasticizer absorbability properties were successfully obtained.

### Example 25

### Synthesis of PVA-based polymer (B-3)

In a reaction tank provided with a stirrer, a condenser, a nitrogen gas introduction port, and an initiator feeding port, 20 parts of methanol, 80 parts of a vinyl acetate monomer, and 0.02 parts of 3-mercaptopropionic acid were placed, and the system was heated to 60°C while nitrogen gas was passed through the system. To the mixture, 1.5 parts of a 1% solution of 2,2'-azobis(2,4-dimethylvaleronitrile) (ADVN) in methanol were added as an initiator and polymerization was initiated.

During the polymerization, the system was maintained at a temperature of 60°C, and 2 parts of a 10% solution of 3-mercaptopropionic acid in methanol was continuously added to the mixture over 4 hours from the polymerization initiation while nitrogen gas was passed through the system. At each of 1-hour and 2-hour time points from the polymerization initiation, 0.5 parts of a 1% solution of ADVN in methanol was added therein. When the reaction yield of vinyl acetate reached 80%, the system was cooled and the polymerization was terminated. The residual vinyl acetate monomer was evaporated off while methanol vapor was added to the obtained reaction product, so that a 50% solution of polyvinyl acetate in methanol was obtained.

Next, to 100 parts of the above-obtained 50% solution of polyvinyl acetate in methanol, 14 parts of methyl acetate and 6 parts of a 3% solution of sodium hydroxide in methanol were added. The mixture was stirred well and subjected to saponification at a temperature of 40°C. The obtained gelatinous substance was crushed to pieces, neutralized with acetic acid, and then dried to give powder of a PVA-based polymer (B-3) having a saponification degree of 71 mol%, and an average polymerization degree of 600 with the content of 3-mercaptopropionic acid of 0.2 mol%, as determined by the analysis.

### Synthesis of PVA-based polymer (A-3)

A PVA-based polymer (A-3) shown on Table 3 was synthesized as in Example 1, except that the aldehyde used in the acetalization reaction was acrolein only.

### Suspension polymerization of vinyl chloride

Using the PVA-based polymer (A-3) thus obtained, suspension polymerization of vinyl chloride was performed as in Example 1, thereby obtaining a vinyl chloride polymer.

### Examples 26 to 28, Reference Example 6

PVA-based polymers (A-3) shown on Table 3 were synthesized as in Example 25, except that various conditions were changed as appropriate.

Using the PVA-based polymers (A-3) thus obtained, suspension polymerization of vinyl chloride was performed as in Example 1, thereby obtaining vinyl chloride polymers.

In Reference Example 6, in which the acetalization reaction was not performed, PVA-based polymer (B-3) was used in place of the PVA-based polymer (A-3) (that is, the PVA-based polymer (B-3) and the PVA-based polymers (A-3) play the same role).

The results of evaluation of the PVA-based polymers (A-3) and the vinyl chloride polymers obtained therefrom are shown on Table 2. In the table, "MPS" means sodium 3-mercapto-1-propanesulfonate.

**TABLE 3**

| | PVA-based Polymer (A-3) | | | | | | Evaluation of Properties of Aqueous Solution | | Evaluation of Vinyl Chloride Resin | | |
|---|---|---|---|---|---|---|---|---|---|---|---|
| | Ionic Skeleton (b) | | Acetal Skeleton (a) | | PD | SD | | | | | |
| | Chain Transfer Agent | Content | Aldehyde | Content | | | Storage Stability | Cloud Point | Ave. Particle Diameter | Scale Adhesion | Plasticizer absorbability property |
| | | mol% | | mol% | | mol% | | °C | µm | | % |
| Ex. 25 | 3-Mercaptopropionic Acid | 0.2 | Acrolein | 0.5 | 600 | 72 | Good | 33 | 136 | Not Observed | 23 |
| Ex. 26 | 3-Mercaptopropionic Acid | 0.2 | Cinnamaldehyde | 0.5 | 600 | 72 | Good | 29 | 121 | Not Observed | 22 |
| Ex. 27 | Mercaptosuccinic Acid | 0.2 | Acrolein | 0.5 | 600 | 72 | Good | 34 | 135 | Not Observed | 23 |
| Ex. 28 | MPS | 0.2 | Acrolein | 0.5 | 600 | 72 | Good | 33 | 133 | Not Observed | 23 |
| Ref. Ex. 6 | 3-Mercaptopropionic Acid | 0.2 | - | - | 600 | 72 | Good | 50 or more | 177 | Not Observed | 18 |

| | | | | | | | | | | | |
|---|---|---|---|---|---|---|---|---|---|---|---|
| Abbreviations: Ex. stands for "Example." Ref. Ex. stands for "Reference Example." PD stands for "Polymerization Degree." SD stands for "Saponification Degree." AV. stands for "Average." | | | | | | | | | | | |

As shown in the table, the PVA-based polymers (A-3) thus obtained in Examples 25 to 28 were good in aqueous solution preparation easiness, aqueous solution storage stability, and hot-water dispersibility. Moreover, when used in the suspension polymerization of vinyl chloride, the PVA-based polymers (A-3) thus obtained in Examples 25 to 28 showed excellent polymerization stabilities, so that vinyl chloride resins with average particle diameters within an appropriate range and large plasticizer absorbability properties were successfully obtained.

### INDUSTRIAL APPLICABILITY

The present invention can provide a particular polyvinyl alcohol-based polymer, which is suitably usable as a dispersion stabilizer (dispersant) and the like.

## Claims

1. A dispersion stabilizer comprising: a polyvinyl alcohol-based polymer (A) having an acetal skeleton (a) having a polymerizable unsaturated bond; and an ionic skeleton (b).

2. The dispersion stabilizer according to claim 1, wherein the acetal skeleton (a) includes a skeleton represented by the following Formula (a1): 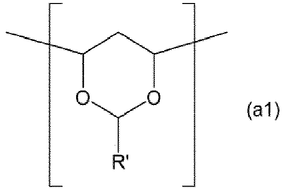 where R' is a group having a polymerizable unsaturated bond.

3. The dispersion stabilizer according to claim 1 or 2, wherein the content of the acetal skeleton (a) in the polyvinyl alcohol-based polymer (A) is in a range of 0.05 to 5 mol% per monomer unit.

4. The dispersion stabilizer according to any one of claims 1 to 3, wherein the ionic skeleton (b) includes a skeleton represented by the following Formula (b1): 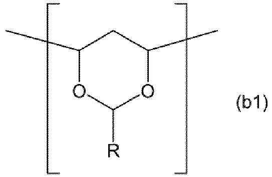 where R is a group having an ionic group.

5. The dispersion stabilizer according to claim 4, wherein the ionic skeleton (b) includes a skeleton represented by Formula 1 (b1) wherein R is a hydrocarbon group having an ionic group.

6. The dispersion stabilizer according to any one of claims 1 to 5, wherein the ionic skeleton (b) includes at least one skeleton selected from skeletons represented by Formula (b1) where R is an ionic group, or from skeletons represented by the following Formula (b1-1): 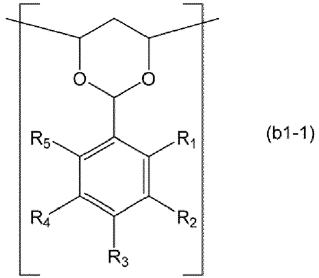 where R₁ to R₅ are independently a hydrogen atom or a substituent, wherein at least one of R₁ to R₅ is an ionic group.

7. The dispersion stabilizer according to any one of claims 4 to 6, wherein the ionic group has at least one selected from acidic groups and salts thereof.

8. The dispersion stabilizer according to any one of claims 1 to 7, wherein the ionic skeleton (b) includes a skeleton corresponding to at least one selected from monomers having an ionic group and chain transfer agents having an ionic group.

9. The dispersion stabilizer according to any one of claims 1 to 8, wherein the ionic skeleton (b) includes a skeleton corresponding to at least one monomer selected from monomers having a carboxyl group, monomers having a sulfonate group, and salts thereof.

10. The dispersion stabilizer according to any one of claims 1 to 9, wherein the ionic skeleton (b) includes a skeleton corresponding to at least one thiol selected from thiols having a carboxyl group, thiols having a sulfonate group, and salts thereof.

11. The dispersion stabilizer according to any one of claims 1 to 10, wherein the content of the ionic skeleton (b) in the polyvinyl alcohol-based polymer (A) is in a range of 0.01 to 5 mol% per monomer unit.

12. The dispersion stabilizer according to any one of claims 1 to 11, wherein the polyvinyl alcohol-based polymer (A) contains the acetal skeleton (a) at a ratio of 2 to 15 mol per mol of ionic skeleton (b).

13. The dispersion stabilizer according to any one of claims 1 to 12, wherein the polyvinyl alcohol-based polymer (A) contains the ionic skeleton (b) at a ratio of 0.2 to 5 mol per 100 mol of a vinyl ester unit.

14. The dispersion stabilizer according to any one of claims 1 to 13, wherein the polyvinyl alcohol-based polymer (A) has a saponification degree in a range of 50 to 90 mol%.

15. The dispersion stabilizer according to any one of claims 1 to 14, wherein the polyvinyl alcohol-based polymer (A) has a polymerization degree in a range of 200 to 2000.

16. The dispersion stabilizer according to any one of claims 1 to 15, wherein the polyvinyl alcohol-based polymer (A) is such that a 4% aqueous solution thereof has a cloud point of 25°C or higher.

17. The dispersion stabilizer according to any one of claims 1 to 16, being a dispersion stabilizer for polymerization.

18. The dispersion stabilizer according to any one of claims 1 to 17, being a dispersion stabilizer for suspension polymerization.

19. The dispersion stabilizer according to any one of claims 1 to 18, being a dispersion stabilizer for suspension polymerization for a vinyl-based monomer including vinyl chloride.

20. A polyvinyl alcohol-based polymer (A) recited in any one of claims 1 to 19.

21. An aqueous liquid, comprising the polyvinyl alcohol-based polymer (A) recited in any one of claims 1 to 19, or the dispersion stabilizer according to any one of claims 1 to 19.

22. A method of producing a vinyl-based polymer, the method comprising polymerizing a viny-based monomer in the presence of the polyvinyl alcohol-based polymer (A) recited in any one of claims 1 to 19 or in the presence of the dispersion stabilizer according to any one of claims 1 to 19.

23. The method according to claim 22, wherein the polymerizing is suspension polymerization.

24. The method according to claim 22 or 23, wherein the polymerizing performs suspension polymerization of a viny-based monomer including vinyl chloride.
